# FASCICULE DE BREVET EUROPEEN

(11) **EP 3 474 349 B1**
(45) Date de publication et mention de la délivrance du brevet: **24.06.2020**
(21) Numéro de dépôt: 18200389.7
(22) Date de dépôt: 15.10.2018
(51) Int. Cl.: H01M 4/04, H01M 4/1391, H01M 4/1393, H01M 4/74

(54) **PROCEDE DE FABRICATION EN CONTINU D'UNE ELECTRODE**
KONTINUIERLICHES HERSTELLUNGSVERFAHREN EINER ELEKTRODE
METHOD FOR THE CONTINUOUS PRODUCTION OF AN ELECTRODE

(30) Priorité: 17.10.2017 FR 1759752
(43) Date de publication de la demande: 24.04.2019
(73) Titulaire: Commissariat à l'énergie atomique et aux énergies alternatives, 75015 Paris (FR); Université de Nantes, 44035 Nantes Cedex 1 (FR); Centre National de la Recherche Scientifique, 75794 Paris Cedex 16 (FR)
(72) Inventeur: ZOLIN, Lorenzo, 38400 SAINT MARTIN D'HERES (FR); PORCHER, Willy, 38000 GRENOBLE (FR); SALOMON, Jérémie, 38250 VILLARD DE LANS (FR); GAUBICHER, Joel, 44000 NANTES (FR); JIMENEZ, Pablo, 44000 NANTES (FR); LESTRIEZ, Bernard, 44000 NANTES (FR)
(74) Mandataire: Brevalex

(56) Documents cités:
- WO-A1-2016/104679
- WO-A1-2017/061714
- JP-A- H10 144 310
- JP-A- S58 223 261
- US-A1- 2010 075 224

## Description

### DOMAINE TECHNIQUE ET ÉTAT DE LA TECHNIQUE ANTÉRIEURE

La présente invention concerne un procédé de fabrication en continu d'une électrode par exemple, pour batterie métal-ion. Les batteries métal-ion sont, par exemple, des batteries Lithium-ion, Sodium-ion, Potassium-ion, Calcium-ion, Magnésium-ion ou encore Aluminium-ion.

Une batterie Métal-ion comporte deux électrodes, une électrode positive (ou cathode) et une électrode négative (ou anode), séparées par un séparateur électriquement isolant mais ioniquement conducteur. Le séparateur est imprégné d'un électrolyte liquide contenant des ions lithium, dans le cas d'une batterie lithium. Pendant les cycles de charge et de décharge, les ions lithium s'insèrent de manière réversible dans les électrodes. Les ions se déplacent de la cathode à l'anode pendant la charge et, inversement, pendant la décharge, ce qui génère le courant. Les électrodes sont formées d'un collecteur de courant recouvert par un matériau actif, aussi appelé matériau d'insertion et un liant.

Les documents WO2016104679, JPH10144310, WO2017061714, JPS58223261 et US2010075224 décrivent des procédés de fabrication d'électrodes.

Les électrodes, positive et négative, sont classiquement fabriquées par enduction, en déposant en continu une encre, contenant le matériau actif, un solvant, un liant et éventuellement un additif électriquement conducteur, sur les collecteurs de courant. La technique la plus couramment utilisée est la technique dite d'enduction avec une fente filière (ou « slot die » en anglais). Concrètement, un feuillard métallique destiné à former le collecteur de courant défile entre un rouleau d'entrainement et une filière en forme de fente de distribution, reliée à un réservoir contenant l'encre. Une couche d'encre est ainsi formée sur le feuillard métallique, dans sa portion centrale, les bandes latérales (ou rives) du feuillard restant nues. Le solvant est, ensuite, évaporé lors d'un séchage en ligne pour former l'électrode. Une étape de séchage est ensuite réalisée pour évaporer les résidus de solvant. Puis une étape de calandrage est réalisée pour diminuer la porosité et augmenter la conductivité de l'électrode.

Avec ce procédé, l'épaisseur de matériau actif pouvant être déposé est limitée par l'évaporation du solvant. Quand le solvant s'évapore, il entraine le liant jusqu'à la surface de l'électrode. Le grammage maximal de l'électrode (ou masse de matériau actif par unité de surface) est, de nos jours, autour de 50mg/cm², ce qui correspond à une épaisseur de matériau actif d'environ 100µm, à l'issue de l'étape de calandrage. La vitesse d'évaporation du solvant limite également la cadence de production de l'électrode. Typiquement, les électrodes sont produites industriellement à une vitesse de 0,1 à 10m/min.

Pour améliorer les performances électrochimiques en particulier, la densité d'énergie, il est nécessaire de réaliser des électrodes dites épaisses, c'est-à-dire des électrodes ayant un grammage très élevé, typiquement de 5mg/cm² à 500mg/cm², de préférence de 50mg/cm² à 500mg/cm², et/ou une couche de matériau actif supérieure à 10µm, et pouvant aller jusqu'à 2mm. Cependant, à cause de la migration du liant à la surface de l'électrode lors de l'évaporation du solvant, de telles électrodes ne peuvent pas être réalisées avec les procédés d'enduction classique. Il est nécessaire d'utiliser d'autres procédés qui permettent d'obtenir une large gamme de valeurs de grammage.

Une solution pour obtenir des électrodes épaisses consiste à utiliser un procédé de dépôt où le solvant peut s'écouler à travers le collecteur de courant.

Par exemple, dans l'article de Wang et al. ("Formulation and characterization of ultra-thick electrodes for high energy lithium-ion batteries employing tailored metal foams", J. Power Sources 196, 2011, pp. 8714), des électrodes ont été préparées en imprégnant un collecteur de cuivre sous forme d'une mousse avec une encre contenant le matériau actif, un liant, et un conducteur électronique. La mousse de cuivre utilisée a une densité surfacique de 372g/m². Cependant, pour ce type de collecteur sous forme de mousse, il peut être difficile d'obtenir un fort grammage car il est difficile de remplir correctement les pores de la mousse. Par exemple, pour une mousse de cuivre ayant une épaisseur de 1,2mm d'épaisseur, le grammage est de 50 à 60mg/cm² de matière active.

Dans la publication de Jabbour et al. ("Flexible cellulose/LiFePO4 paper-cathodes: toward eco-friendly all-paper Li-ion batteries", Cellulose (2013), Vol. 20, pp. 571-582), une électrode est préparée par filtration d'une encre sur un tissu en nylon ayant un seuil de filtration de 33µm. L'encre contient des particules de LiFePO₄, du noir de carbone et des fibres de cellulose. Le noir de carbone est dispersé en solution aqueuse avec de la carboxyméthylcellulose et les fibres de cellulose doivent être pré-traitées avec du sulfate d'aluminium hydraté pour favoriser l'adsorption du noir de carbone, ce qui ajoute des étapes au procédé et un surcoût en terme de réactif et de traitements des effluents industriels. L'électrode finale a une épaisseur de 280µm sans être calandrée. Cependant, la conductivité de l'électrode reste relativement faible pour des batteries Lithium-Ion car les fibres de cellulose ne sont pas électriquement conductrices.

Dans l'article de Beneventi et al. ("Pilot-scale elaboration of graphite/microfibrillated cellulose anodes for Li-ion batteries by spray deposition on a forming paper sheet", Chemical Engineering Journal, 2014, Vol. 243, pp. 372-379), une encre aqueuse contenant du graphite, du noir de carbone, des fibres de cellulose, du sulfate d'aluminium est déposée, par pulvérisation, et filtrée à travers un substrat en papier. A la fin du procédé, le substrat papier est solidaire de la couche de matériau actif, et est, par la suite, utilisé comme séparateur dans une batterie. Cependant, un séparateur en papier présente de moins bonnes performances électrochimiques qu'un séparateur classique et sa présence diminue la conductivité ionique. De plus, même si la présence des fibres de cellulose assure la cohésion mécanique de l'électrode, leur présence diminue sa conductivité électrique. Leur présence au sein de l'électrode diminue aussi la fraction volumique en matériau actif. De plus, l'utilisation d'un séparateur papier soulève également une problématique liée à la sécurité du dispositif car un tel séparateur est inflammable et peut prendre feu dans le cas de court-circuit.

Une autre solution pour obtenir des électrodes épaisses consiste à remplacer le solvant de l'encre par l'électrolyte (document WO-A-2017/062197). Il n'y a plus besoin d'éliminer le solvant. Cependant, de telles électrodes ne peuvent pas être compressées, il est donc difficile d'obtenir des porosités inférieures à 45% et donc de fortes densités d'énergie volumiques. De plus, l'électrolyte doit être choisi de manière à permettre une bonne dispersion du matériau actif pour former une encre homogène. Ce procédé est applicable uniquement à des collecteurs de courant poreux pouvant retenir le matériau actif.

### EXPOSÉ DE L'INVENTION

C'est, par conséquent, un but de la présente invention de proposer un procédé remédiant aux inconvénients de l'art antérieur, et en particulier, de proposer un procédé permettant de fabriquer des électrodes épaisses, présentant une structure homogène, et ayant une bonne conductivité, le procédé pouvant être industrialisé à grande échelle.

Ce but est atteint par un procédé de fabrication en continu d'une électrode comprenant les étapes suivantes réalisées simultanément et en continu :
a) Défilement continu d'un collecteur de courant,
   le collecteur de courant ayant une première face et une seconde face opposée à la première face, le collecteur de courant ayant au moins un trou allant de la première face à la seconde face, le collecteur de courant comportant au moins un trou traversant non ébavuré, la bavure faisant saillie sur la première face du collecteur de courant,
b) Dépôt en continu d'une encre sur la première face du collecteur de courant,
   l'encre comprenant au moins un solvant et un matériau actif d'électrode,
c) Aspiration en continu de l'encre déposée, à travers le collecteur de courant, depuis la première face vers la seconde face du collecteur de courant, par un système d'aspiration situé sur la seconde face du collecteur de courant, pour éliminer le solvant, de manière à former une électrode, l'épaisseur de l'électrode étant supérieure au rayon du trou traversant,
un filtre étant disposé entre le collecteur de courant et le système d'aspiration, le filtre ayant des tailles de pores allant de 0,1µm à 50µm, et de préférence de 0,2µm à 5µm, de manière à retenir les constituants solides de l'encre, et, en particulier, le matériau actif.

Le procédé se distingue fondamentalement de l'art antérieur en ce que l'encre est aspirée à travers, à la fois un collecteur de courant non ébavuré et un filtre, pour éliminer le solvant.

La présence de la bavure améliore l'adhérence de la couche de matériau actif avec le collecteur ainsi que les performances électriques de l'électrode. A partir d'un collecteur de courant troué et non ébavuré, de faible épaisseur, typiquement initialement inférieure à 50µm, de préférence inférieure à 25µm, la teneur en matière active ramenée à l'électrode est bien supérieure à celle que l'on peut rencontrer dans l'état de l'art.

Le filtre permet de retenir le matériau actif, quelle que soit la géométrie du collecteur de courant. En séchant, le matériau actif forme une couche solidaire et compacte avec collecteur de courant. Le procédé est applicable à de nombreux collecteurs de courant, munis d'un ou plusieurs trous traversants, par exemple, des collecteurs de courant sous forme d'un élément poreux, d'une feuille ou d'un feuillard, ou encore sous forme d'un matériau tissé.

Il n'y a pas besoin d'évaporer le solvant car il est éliminé par filtration. L'aspiration conduit à une répartition homogène du matériau dans et/ou sur le collecteur de courant, même dans le cas d'un collecteur de courant sous la forme poreuse, comme par exemple sous forme d'une mousse.

Avec le procédé de l'invention, on n'observe pas de phénomène de migration du liant vers la surface de l'électrode, et donc de gradient de composition.

Le grammage de l'électrode est amélioré.

Le filtre peut être ensuite retiré et éventuellement réutilisé.

Le procédé permet de produire continûment, et à grande échelle, des électrodes épaisses dont la charge de matériau actif va de 5mg/cm² à 500mg/cm², de préférence de 50mg/cm² à 500mg/cm², et/ou dont l'épaisseur de matériau actif va de 10µm à 2mm, de préférence de 100µm à 2mm, et encore plus préférentiellement de 100µm à 1mm, par exemple 300nm à 500µm, après compression.

Le matériau actif d'une telle électrode peut avoir une porosité allant de 20% à 50%, et de préférence de 20% à 45%, par exemple de 30% à 45%. L'électrode peut avoir une capacité surfacique allant de 1mAh/cm² à 50mAh/cm² et, de préférence, de 10mAh/cm² à 20mAh/cm².

Finalement, l'électrode obtenue avec le procédé de l'invention présente une bonne conductivité transversale (supérieure à 200S/m, voire supérieure à 1000S/cm).

L'énergie nécessaire à la filtration du solvant (typiquement de 0,01 à 1kW/m²) est inférieure aux quantités d'énergie nécessaires au procédé d'évaporation du solvant de l'art antérieur (typiquement de 0,5 à 10 kW/m²). De plus, avec un tel procédé la vitesse de production des électrodes va de 0,1 à 1000m²/min, de préférence de 100 à 1000m²/min, ce qui est supérieur aux vitesses de production de l'art antérieur qui sont typiquement de 0,1 à 50m²/min, parfois jusqu'à 100m²/min. Le procédé de l'invention permet de produire à une cadence plus élevée et à moindre coût énergétique des électrodes épaisses.

Avantageusement, le filtre a une porosité supérieure à 40%, pour faciliter l'aspiration et l'écoulement du solvant.

Avantageusement, le système d'aspiration se situe en aval de la zone de dépôt, dans le sens de défilement du collecteur de courant. L'encre est déposée dans une zone de dépôt, le collecteur de courant défile jusqu'à une zone d'aspiration où l'encre est aspirée.

Selon une autre variante avantageuse, le système d'aspiration est face à la zone de dépôt de manière à aspirer immédiatement l'encre dès son dépôt sur le collecteur de courant.

Selon une première variante avantageuse, le collecteur de courant comprend, et, de préférence, est constitué de fibres de carbone. Les fibres de carbone ont une faible densité intrinsèque (typiquement de 1,8 à 2,25g/cm³) et présentent une bonne résistance à l'oxydation, ce qui est particulièrement intéressant pour les formulations aqueuses. La structure 3D du collecteur de courant, combinée à la surface spécifique élevée des fibres de carbone améliorent l'adhérence de la matière active avec le collecteur de courant.

Avantageusement, le diamètre des fibres de carbone va de 2 à 50µm et la masse volumique de fibres de carbone va de 5 à 400mg/cm³. Le collecteur de courant a une faible densité apparente par rapport à des collecteurs de courant en métal (aluminium ou cuivre par exemple) classiquement utilisés.

Selon une autre variante avantageuse, le collecteur de courant est une feuille ou un feuillard métallique

Avantageusement, le filtre est en verre fritté, en papier ou en polymère. De tels filtres sont faciles à réaliser et réutilisable.

Dans ces modes de réalisation, le filtre peut être retiré, afin de ne pas diminuer les performances électrochimiques de l'électrode et de la batterie contenant une telle électrode.

Selon une autre variante, le filtre est électriquement conducteur.

Avantageusement, le filtre est métallique ou en carbone.

Selon un mode de réalisation avantageux, le filtre est solidaire du collecteur de courant. Le filtre et le collecteur de courant forment une seule pièce, un monobloc, la partie inférieure formant le filtre et la partie supérieure formant le collecteur de courant. La manipulation de ce type d'élément est plus aisée que celle d'un filtre et d'un collecteur de courant non solidaires entre eux.

Avantageusement, l'aspiration va de -100mbar à -1000mbar, et, de préférence, de -400mbar à -900mbar. De telles valeurs permettent d'aspirer efficacement le solvant tout en évitant une trop grande consommation d'énergie.

Avantageusement, l'encre a une viscosité allant de 0,001 à 50Pa.s, et de préférence de 0,01 à 50Pa.s. De telles viscosités permettent un bon écoulement du solvant à travers de nombreux substrats et/ou filtres (mousse, matériau tissé, feuille ou feuillard ayant des trous traversants, etc).

Avantageusement, après l'étape c), le procédé comporte une étape dans laquelle un liant est déposé sur l'électrode. Le liant permet d'améliorer les propriétés mécaniques de l'électrode.

Avantageusement, le procédé comporte une étape ultérieure dans laquelle l'électrode est calandrée. L'étape de calandrage permet d'obtenir l'épaisseur et la porosité désirée. Les électrodes, obtenues après l'étape de compression, présentent une porosité faible, typiquement inférieure ou égale à 50%, et/ou, des épaisseurs de couches de matériau actif très élevées, de préférence au moins égale à 200µm par face de collecteur tout en limitant la quantité relative de collecteur de courant dans l'électrode.

Avantageusement, le matériau actif est du graphite et le collecteur de courant est en cuivre ou en fibres de carbone.

Avantageusement, le matériau actif est un oxyde de lithium-nickel-cobalt-manganèse et le collecteur de courant est en aluminium ou en fibres de carbone.

Des électrodes, élaborées avec de telles associations de matériaux actifs et de collecteurs de courant, présentent de bonnes performances électrochimiques.

### BRÈVE DESCRIPTION DES DESSINS

La présente invention sera mieux comprise sur la base de la description qui va suivre et des dessins en annexe sur lesquels :
- les figures 1a et 1b sont des représentations schématiques, respectivement, en vue de dessus et en coupe, d'un collecteur de courant percé par une pluralité de trous traversants, selon un premier mode de réalisation de l'invention,
- la figure 2 est une représentation schématique d'une électrode comprenant un collecteur de courant en feutre de fibres de carbone dans lequel sont insérées des particules de matériau actif, selon un deuxième mode de réalisation de l'invention,
- la figure 3 est une reproduction d'une vue photographique d'une électrode pliée à base de carbone obtenue selon le procédé de réalisation de l'invention,
- la figure 4 est une représentation schématique d'une ligne de fabrication continue d'une électrode épaisse selon un mode de réalisation particulier de l'invention,
- la figure 5 est un diagramme de flux du procédé de fabrication continue d'une électrode épaisse, selon un mode de réalisation particulier de l'invention,
- la figure 6 est un cliché obtenu au microscope optique d'une vue en coupe d'une électrode à base de graphite sur un collecteur de courant en cuivre percé, obtenue selon le procédé de l'invention, avant compression,
- la figure 7 est un cliché obtenu au microscope électronique à balayage d'une vue en coupe d'une électrode à base de NMC sur un collecteur en aluminium percé, obtenue selon le procédé de l'invention, avant compression.

Les différentes parties représentées sur les figures ne le sont pas nécessairement selon une échelle uniforme, pour rendre les figures plus lisibles.

Les différentes possibilités (variantes et modes de réalisation) doivent être comprises comme n'étant pas exclusives les unes des autres et pouvant se combiner entre elles.

### EXPOSÉ DÉTAILLÉ DE MODES DE RÉALISATION PARTICULIERS

Le procédé de revêtement permet de déposer, en continu, sur un collecteur de courant 10 un matériau actif d'électrode 20 pour former une électrode, et en particulier pour former une électrode épaisse.

### Collecteur de courant :

Le collecteur-de courant 10 comprend au moins un trou traversant non ébavuré, et de préférence, une pluralité de trous traversants non ébavurés, les trous allant d'une première face où est déposée l'encre jusqu'à la face opposée, de manière à pouvoir aspirer le solvant à travers le collecteur de courant 10.

Les trous peuvent avoir la même forme ou des formes différentes. Les trous 12 ont une forme circulaire, triangulaire ou rectangulaire. On les définit par la suite suivant leur diamètre. Le diamètre se rapporte également à la longueur pour le rectangle ou le plus grand côté pour le triangle. Le rayon du trou correspond à la moitié du diamètre du trou. De préférence, les trous sont circulaires. Les trous traversants 12 ont un diamètre d'au moins 0,2mm, et de préférence un diamètre inférieur à 2mm. Les trous peuvent avoir des diamètres différents ou, de préférence, un même diamètre. Encore plus préférentiellement, les trous sont circulaires et ont le même diamètre.

De préférence, le collecteur de courant 10 est percé, au moins dans sa portion centrale d'une pluralité de trous traversants 12.

Les trous traversants 12 peuvent être irrégulièrement espacés.

De préférence, les trous traversants 12 sont régulièrement espacés. On considère les deux axes X, Y orthogonaux dans le plan du collecteur (figure la). Les trous traversants 12 sont répartis en étant alignés selon plusieurs rangées selon l'axe X et selon plusieurs colonnes selon l'axe Y. Ils sont espacés selon un pas D1 suivant l'axe X, correspondant à la distance entre les centres de deux trous adjacents suivant l'axe X compris entre 1,2 et 2 fois le diamètre des trous 12. Ils sont espacés selon un pas D2 suivant l'axe Y, correspondant à la distance entre les centres de deux trous 12 adjacents suivant l'axe Y, compris entre 1,2 et 2 fois le diamètre des trous 12. Une telle disposition des trous 12 conduit, avantageusement, à une bonne aspiration du solvant durant la phase de filtration. Les distances D1 et D2 sont, de préférence, de 1,5 mm et le diamètre des trous est de 1mm.

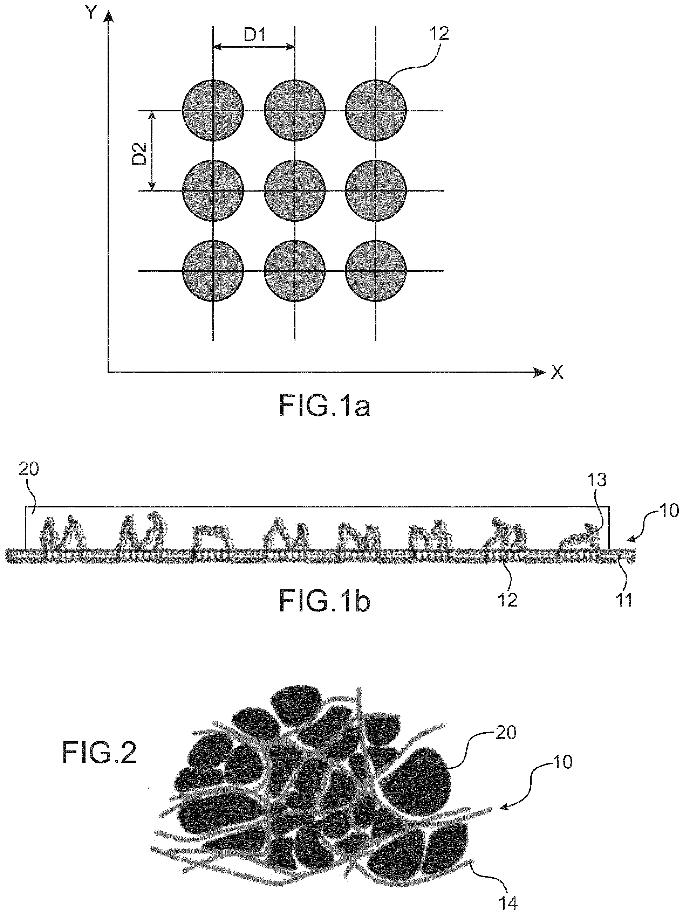

Le procédé de perçage induit des bavures 13 de forme irrégulière qui font saillie sur la première face du collecteur de courant 10, autour de chacun des trous 12. On appelle hauteur de bavure, la dimension de la bavure faisant saillie par rapport à la première face du collecteur de courant. Les trous traversants ne sont pas ébavurés, c'est-à-dire que les bavures faisant saillie ne sont pas retirées (figure 1b). De ce fait, la masse du collecteur de courant 10 ainsi formé, i.e. avec les bavures 13 saillantes, est sensiblement la même que celle du collecteur de courant non percé d'origine. Les bavures 13 ont, par exemple, une hauteur maximale de 1mm.

Une fois le matériau actif 20 déposé, sur la première face du collecteur de courant 10, les bavures 13 pénètrent dans la couche de matériau actif 20. Les inventeurs ont mis en évidence que les bavures 13, non seulement, n'induisaient pas de court-circuit, mais qu'en outre, elles amélioraient l'adhérence de la couche de matériau actif 20 avec le collecteur de courant 10 ainsi que les propriétés électriques du collecteur de courant 10 (conductivité transversale). Des épaisseurs élevées de matériau actif 20 peuvent être atteintes.

L'épaisseur de l'électrode après filtration est supérieure au rayon des trous traversants 12 pour éviter que les bavures ne puissent être affleurantes sur le dessus de l'électrode. La hauteur de l'électrode après filtration est supérieure à la hauteur des bavures 13.

Le collecteur de courant 10 est électriquement conducteur et a, avantageusement, une conductivité électrique de 1.10³S/m à 7.10⁷S/m, et de préférence, de 1.10⁴S/m à 7.10⁷S/m.

Le collecteur de courant 10 est, par exemple, en un ou plusieurs métaux et/ou en un matériau carboné, tel que le graphite, le carbone ou le graphène.

Le collecteur de courant 10 de l'électrode positive peut être, par exemple, en aluminium.

Le collecteur de courant 10 de l'électrode négative peut être, par exemple, en cuivre, en cuivre nickelé ou en aluminium.

Le collecteur de courant 10 de l'électrode positive et/ou le collecteur de courant de l'électrode négative peuvent également être en fibres de carbone.

Les collecteurs de courant 10 de l'électrode positive et de l'électrode négative peuvent être indifféremment choisis parmi un collecteur de courant, de type feuille ou feuillard, avec trous traversants, non ébavurés, et un collecteur de courant poreux avec trous traversants non ébavurés.

### Collecteur de courant de type feuille ou feuillard :

Selon un premier mode de réalisation, le collecteur de courant 10 est élaboré à partir d'une feuille ou d'un feuillard métallique 11. Par feuillard, on entend une plaque ou une bande formée de plusieurs films ou couches superposées. Le collecteur 1 est, par exemple, en cuivre ou en aluminium. Il a une épaisseur de 2 à 50µm, de préférence de 5µm à 30µm, par exemple de l'ordre de 10µm ou de 20µm.

Le collecteur de courant 10 peut être recouvert d'une couche de revêtement, par exemple en carbone pour améliorer les performances électriques et mécaniques de l'électrode.

### Collecteur de courant poreux :

Selon un autre mode de réalisation, comme représenté sur la figure 2, le collecteur de courant 10 est poreux (en trois dimensions). Le collecteur de courant 10 laisse passer le solvant et peut également permettre de retenir au moins en partie, voire totalement, le matériau actif 20. Le collecteur de courant 10 poreux peut avoir des tailles de pores de 5µm à 1000µm et de préférence de 20µm à 250µm. La taille des pores sera choisie par l'homme du métier en fonction de la taille des particules de matériau actif utilisées. Le collecteur de courant 10 a, par exemple, une porosité supérieure à 40%, par exemple de 50% à 98%, et de préférence de 80% à 98%, avant l'étape de compression.

La conductivité électrique d'une électrode réalisée à partir d'un collecteur de courant 10 poreux est élevée car le collecteur de courant 10 joue le rôle de réseau électrique percolant dans l'électrode.

Les particules de matériau actif 20 peuvent s'insérer, s'enchevêtrer dans la matrice poreuse du collecteur de courant 10. Un collecteur de courant 10 poreux assure une bonne adhérence du matériau actif 20, en raison d'une structure en trois dimensions et d'une surface spécifique élevée, et l'électrode obtenue présente de bonnes propriétés mécaniques.

La porosité élevée du collecteur de courant 10 poreux 3D combinée à la pression d'aspiration élevée appliquée pendant le processus de filtration permet d'obtenir une insertion homogène des particules de matière active 20 dans chacun des plans de l'épaisseur du dépôt. La surface macroscopique apparente de l'électrode ainsi obtenue est plane, ce qui est nécessaire pour l'assemblage dans les batteries.

L'épaisseur du collecteur de courant 10 poreux va, par exemple, de l'ordre de quelques micromètres à l'épaisseur total de l'électrode. L'épaisseur du collecteur de courant 10 va, par exemple, de 5µm à 2mm, et de préférence de 300µm à 700µm.

Le collecteur de courant 10 poreux est, par exemple, en métal ou en carbone. Le collecteur de courant peut, en outre, être métallisé (recouvert d'un revêtement métallique). De préférence, il est en carbone. Un collecteur de courant en carbone est particulièrement intéressant puisque le carbone ne se corrode pas en présence d'eau dans un environnement basique, contrairement à l'aluminium. Cela permet donc de pouvoir utiliser n'importe quelle électrode au-dessus de 1V sans critère de pH.

Le collecteur de courant 10 peut être en fibres 14. Les fibres 14 peuvent être tissées ou non tissées. Un tel collecteur de courant, formé de fibres, permet la filtration du solvant et assure une forte adhésion mécanique puisque les particules de matériau actif 20 peuvent s'insérer dans la structure en trois dimensions du collecteur de courant 10 (figure 2). De préférence le collecteur de courant est en fibres 14 de carbone.

Le diamètre des fibres 14 va, par exemple, de 2µm à 50µm, de préférence de 2 à 20µm, encore plus préférentiellement de 5µm à 10µm, par exemple de 7µm. Le rapport entre la longueur et le diamètre est, avantageusement, supérieur à 4.

La densité apparente du feutre de fibres de carbone peut aller de 10 à 900mg/cm³ et, de préférence de 10 à 100mg/cm³, par exemple, de 5 à 400mg/cm³, ce qui permet de former un collecteur ayant une bonne conductivité électrique et de former un réseau suffisamment poreux dans lequel peuvent s'insérer les particules de matériau actif.

Le choix de la forme du collecteur et de sa surface spécifique sera déterminé par l'homme du métier de manière à améliorer l'adhésion entre le collecteur de courant et la couche de matériau actif.

### Filtre :

Lors du dépôt de l'encre 30 et lors de l'étape d'aspiration de l'encre 30, un filtre 40 est disposé sous le collecteur de courant 10, en regard de la seconde face du collecteur de courant 10.

Le filtre 40, ou élément filtrant, doit permettre le passage du solvant et la rétention du matériau actif 20.

La taille des pores du filtre va de 0,1µm à 50µm, par exemple de 0,2µm à 50µm. Le filtre a, de préférence, des pores de 0,2µm à 5µm, et encore plus préférentiellement de 0,2µm à 1µm, par exemple de 0,45µm. La taille des pores du filtre 40 est inférieure à celle du collecteur de courant 10.

La porosité du filtre 40 est supérieure à 40%, elle va, par exemple, de 50% à 98%.

On choisira, par exemple, un filtre 40 pour lequel le passage du solvant peut être réalisé à au moins 10mL/min/cm². Le filtre 40 sera choisi par l'homme du métier de manière à avoir des propriétés mécaniques telles qu'il peut être enroulé, déroulé et entrainé sur un tapis de convoyage sans être déchiré. On choisira, par exemple, un filtre 40 dont la rupture à la traction est supérieure à 15MPa et dont le module d'Young est supérieur à 1GPa.

Le filtre 40 peut être réalisé en tout matériau inerte chimiquement vis-à-vis du solvant de l'encre. Par exemple, il peut être en verre, en papier ou en polymère. A titre illustratif, il peut être en cellulose (et plus particulièrement en fibres de cellulose), en polyéthylène, en polypropylène, en poly(fluorure de vinylidène) ou en verre fritté. Le filtre est, par exemple, une membrane poreuse en polymère. Par exemple, il s'agit d'une membrane de poly(fluorure de vinylidène) (PVDF).

Il pourrait également être en un métal, éventuellement, recouvert d'un revêtement anticorrosion.

Le filtre 40 peut être hydrophile.

Le filtre 40 peut être un élément mobile par rapport au collecteur de courant.

Selon un mode de réalisation particulier, le filtre 40 est intégré dans le collecteur de courant 10. Il forme la partie inférieure du collecteur de courant 10. Il a une porosité inférieure à celle du collecteur de courant 10. Le filtre 40 est, de préférence, électriquement conducteur. Il est, par exemple, métallique et/ou carboné. Il est, par exemple, en fibres. De préférence, il s'agit de fibres de carbone.

### Encre :

Le matériau actif 20 à déposer sur le collecteur de courant 10 est dispersé dans un solvant, de manière à former une encre 30 homogène.

L'encre 30 peut être déposée par toute technique adaptée. Il peut s'agir d'un dépôt par pulvérisation (« spray »), par enduction par rouleau (« roll-coating »), par revêtement de couches (« film coating »), en versant un liquide (« liquid pouring »), ou encore par dépôt par impression (« printing »).

L'encre 30 comprend, au moins, un matériau actif et un solvant. Elle peut comprendre, en outre, un additif conducteur électronique (par exemple des fibres électriquement conductrices), et/ou un liant et/ou un agent dispersant.

Le matériau actif 20 peut être un matériau actif d'électrode positive ou d'électrode négative.

Le matériau actif 20 de l'électrode positive (ou cathode) est, par exemple, un matériau d'insertion du cation lithium qui est, en général, composite, comme le phosphate de fer lithié LiFePO₄, l'oxyde de cobalt lithié LiCoO₂, l'oxyde manganèse lithié, éventuellement substitué, LiMn₂O₄ ou un matériau à base de lithium-nickel-cobalt-manganèse LiNiₓMn_{y}Co_{z}O₂ avec x+y+z = 1 (aussi appelé NMC), tel que LiNi_{0.33}Mn_{0.33}Co_{0.33}O₂, ou un matériau à base de LiNiₓCo_{y}Al_{z}O₂ avec x+y+z = 1 (aussi appelé NCA).

Le matériau actif 20 de l'électrode négative (ou anode) peut comprendre ou être constituée de carbone, de graphite ou de Li₄Ti₅O₁₂ (matériau titanate). Il peut également s'agir d'un matériau à base de silicium ou à base de lithium ou de sodium, ou à base d'étain et de leurs alliages ou de composite formé à base de silicium.

L'homme du métier choisira le matériau actif en fonction du cahier des charges de la batterie Li-Ion.

Le solvant peut être un solvant organique, comme de l'éthanol, ou de l'eau. L'homme du métier choisira un solvant qui ne dégrade pas le matériau actif. L'eau sera préférée pour éviter l'utilisation de produits toxiques et/ou dont les effluents nécessitent une étape de traitement ultérieur.

Le solvant a de préférence une constante diélectrique élevée (ou permittivité relative), supérieure à 20, afin de favoriser la dispersion. Il est aussi de préférence peu visqueux, typiquement il a une viscosité inférieure à 0,002 Pa.s, ce qui permet d'avoir une filtration rapide et une structuration de la matière active et des additifs plus homogène. Cette structuration confère les propriétés mécaniques à la couche obtenue. Par exemple, pour une encre, contenant un matériau actif sous forme de particules et des fibres conductrices, déposée sur un collecteur de courant avec des trous traversants et des bavures, une viscosité inférieure à 0,002Pa.s permet de bien imbriquer les éléments solides de la couche (fibres et particules) et les bavures du collecteur de courant, malgré le facteur de forme très élancée des fibres.

L'additif conducteur électronique peut être, de préférence, un matériau carboné, à savoir un matériau comprenant du carbone à l'état élémentaire et, de préférence, sous forme divisée, tel que des particules sphériques, des plaquettes ou des fibres. On peut citer, comme matériau carboné, du graphite ; des billes de mésocarbone ; des fibres de carbone ; du noir de carbone, tel que du noir d'acétylène ; du graphène ; des nanotubes de carbone ; et tout mélange de ceux-ci.

De préférence, l'additif conducteur électronique est sous forme de fibres de carbone. Elles ont avantageusement un facteur de forme entre diamètre et longueur supérieur à 5, de préférence supérieur à 10. Les fibres sont de préférence des fibres de carbone. La matière active et l'additif conducteur sous formes de fibres sont de préférence dispersés par agitation mécanique dans un solvant. Des additifs de dispersion peuvent également être ajoutés lors de cette étape.

D'autres additifs conducteurs électroniques, pas nécessairement avec un facteur de forme important, peuvent également être ajoutés lors de cette étape.

L'encre 30 peut également comprendre un dispersant. Un dispersant permet de charger électriquement la surface des particules de matériaux actifs, et notamment des particules d'oxyde, pour assurer une bonne dispersion par répulsion électrostatique. Le dispersant peut être, avantageusement, choisi dans le groupe comprenant des dispersant polymériques, comme la carboxyméthyle cellulose (notée CMC), l'acide poly(acrylique acide co-maléique) (noté PAMA), le poly(éthylène glycol) p-isooctyl-phényl éther (noté Triton X-100), le poly(éthylène imine) (noté PEI) et l'acide polyacrylique (noté PAA).

Elle peut également comprendre un liant polymérique. Le liant assure la cohésion du dépôt, en améliorant l'adhérence du matériau actif sur le collecteur de courant, et l'adhésion entre les particules et l'électrolyte. Le liant peut être avantageusement choisi dans le groupe comprenant le PVA (alcool polyvinylique), le PEG (polyéthylène glycol), les polyacrylates, les celluloses, comme par exemple la carboxyméthyle cellulose, le latex polyacrylique, le latex styrène-butadiène (ou SBR pour "styrène butadiene rubber"), polyaniline (Emeraldine), l'acide polyacrylique, le polytétrafluoroéthylène (PTFE), le polyacrylate de sodium, la dextrine, et le gluten.

L'encre 30 peut être rendue homogène par brassage mécanique.

L'encre 30 comprenant le solvant, le matériau actif, éventuellement l'additif conducteur, et éventuellement le liant, a une viscosité allant de 0,001Pa.s à 50Pa.s, de préférence de 0,01 à 50Pa.s. La concentration en matière sèche va de 3% à 70% massique.

De préférence, dans le cas où un collecteur de courant 10 poreux est utilisé, on choisira une encre 30 avec une faible viscosité (typiquement de 0,001 à 50Pa.s) pour pouvoir être facilement filtrée. Par exemple, pour un filtre en PVDF, on pourra choisir une viscosité inférieure à 1Pa.s.

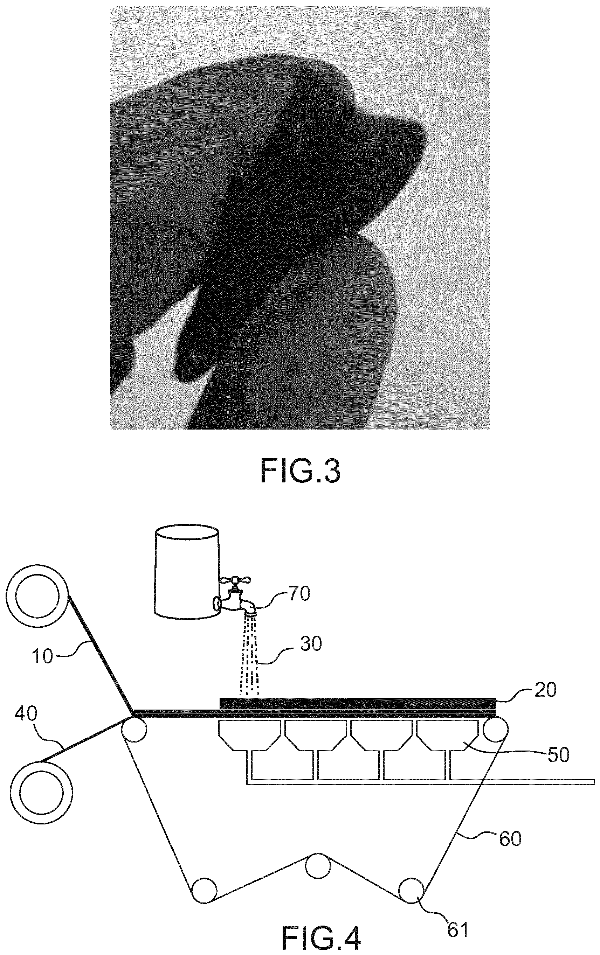

La faible viscosité de l'encre combinée à la forte porosité du collecteur de courant et à l'aspiration réalisée lors de l'étape de filtration, conduit à l'élimination du solvant et à l'insertion du matériau actif dans la structure 3D du collecteur de courant. Le collecteur de courant reste flexible malgré l'important grammage (figure 3).

### Ligne de revêtement en continu d'un substrat en mouvement par un matériau actif d'électrode :

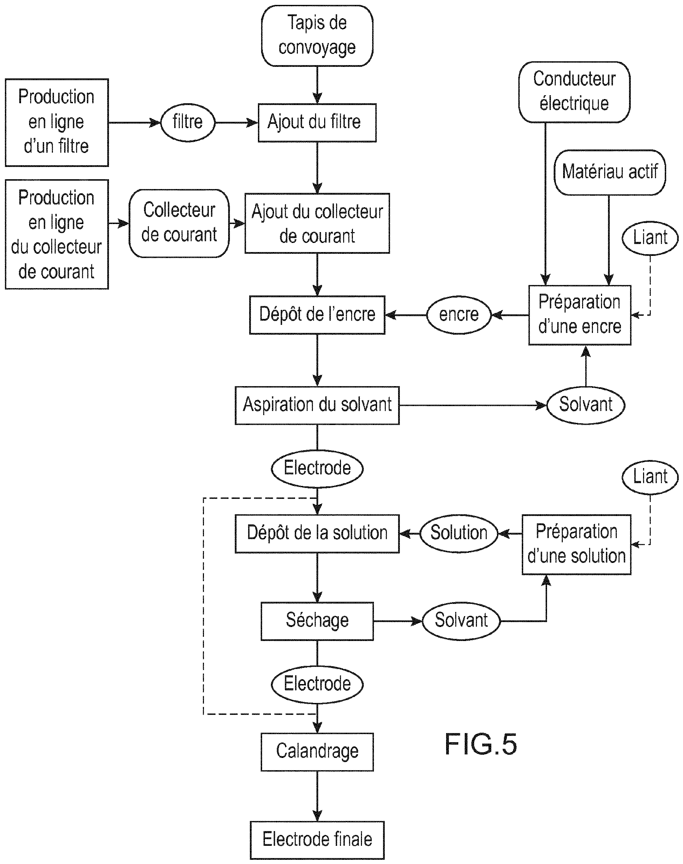

Différents modes de réalisation de la ligne de fabrication de l'électrode sont représentés, schématiquement, sur la figure 4 et par un diagramme de flux tel que défini sur la figure 5.

Un moyen d'entrainement 60 permet de faire défiler en continu le collecteur de courant 10 (étape a).

De préférence, le filtre 40 est également entrainé en continu, parallèlement au collecteur de courant.

De préférence, le filtre 40 et le collecteur de courant 10 sont sous la forme de bandes continues ou de rubans continus qui défilent simultanément et à la même vitesse. Cela permet une meilleure juxtaposition de ces éléments, ce qui facilite les étapes de dépôt de l'encre 30 et d'aspiration, et évite les pertes de matériaux.

Le collecteur de courant 10 et le filtre 40 peuvent être, par exemple, positionné sur un tapis de convoyage 60 (aussi appelé convoyeur à bande, bande convoyeuse, bande transporteuse ou encore tapis convoyeur ou tapis roulant). Le tapis de convoyage est, par exemple, poreux pour permettre l'aspiration du liquide. On pourra utiliser un fourdrinier (« Fourdrinier wire »), par exemple, utilisé dans l'industrie papetière, c'est-à-dire un matériau tissé en plastique. Dans ce mode de réalisation particulier, le filtre 40 et le tapis de convoyage 60 peuvent former un même élément.

Le filtre 40 est positionné, en premier, sur le tapis de convoyage 60. Il a, par exemple, une largeur inférieure ou égale à celle du tapis. Le collecteur de courant 10 est ensuite positionné sur le filtre 40. Il est accolé au filtre 40. Le collecteur de courant 10 a, par exemple, une largeur identique ou proche de celle du filtre 40.

Le tapis de convoyage 60 peut avoir une longueur de 1m à 10m, par exemple 5m, et une largeur de 0,1m à 10m, par exemple de 0,25m à 1m, par exemple 40cm. Lors du dépôt du matériau actif, le tapis de convoyage peut avancer à une vitesse de 0,5m/min à 10m/min, par exemple de 1m/min. Comme représenté sur la figure 4, le tapis 60 peut être entrainé par un ou plusieurs rouleaux 61. Les rouleaux 61 sont aussi appelés rouleaux de support de bande.

Selon un mode de réalisation particulier, non représenté, le filtre 40 peut être stationnaire. Il peut être soumis, de temps en temps, à une étape de régénération de manière à éviter la saturation des pores du filtre 40 par les particules de matériau actif 20 ou tout autre constituant de l'encre 30.

Le défilement du collecteur de courant 10 permet de réaliser les différentes étapes, et notamment le dépôt de l'encre (étape b)) et l'aspiration de l'encre (étape c)) de façon continue. Pour cela, l'installation de revêtement en continu du collecteur de courant 10 comprend, de l'amont vers l'aval, le long du chemin de défilement du collecteur de courant, au moins un moyen de dépôt d'encre 70 pour réaliser l'étape b) et au moins un moyen d'aspiration 50 pour réaliser l'étape c). Le moyen d'aspiration 50 est disposé du côté opposé au moyen de dépôt de l'encre 70, par rapport au collecteur de courant 10, c'est-à-dire au niveau de la seconde face du collecteur de courant 10.

Le moyen de dépôt d'encre 70 est pourvu d'un moyen d'amenée en continu de l'encre. Il y a, par exemple, une cuve, de préférence munie d'un moyen de mélange, et alimentée en continu. Elle peut être disposée au-dessus du moyen de dépôt de l'encre 70.

L'encre 30 est, de préférence, déposée perpendiculairement à l'empilement collecteur de courant/filtre.

L'encre 30 peut être déposée par toute technique adaptée, par exemple, par pulvérisation (« spray coating »), par impression (« printing»), par enduction telle que l'enduction à rouleau («roll coating») ou par simple dépôt de solution.

Lors de l'étape c), réalisée simultanément ou successivement à l'étape b), le solvant est aspiré. L'aspiration est obtenue en réalisant un vide entre la face du substrat, formé du collecteur de courant et du filtre, recouverte par l'encre 30 et la face opposée. La force d'aspiration va -100mbar à -1000mbar, et de préférence, de -400 à - 900mbar, encore plus préférentiellement de -500 à -900mbar. Les valeurs sont des valeurs relatives. Durant l'étape de filtration, le solvant est, de préférence, totalement éliminé. Les particules de matériau actif 20 étant retenues par le substrat, le solvant peut être réutilisé pour former une nouvelle encre.

L'étape de filtration est, de préférence, réalisée avec un ou plusieurs systèmes d'aspiration 50, comme par exemple avec une ou plusieurs caisses aspirantes. Le substrat défile au-dessus de la ou des caisses aspirantes, et le solvant est aspiré en continu tout au long de la zone d'aspiration.

Par exemple, comme illustré sur la figure 4, à partir de la position de position de dépôt 70, sont positionnées un ou plusieurs caisses (quatre par exemple) d'aspiration 50. Chaque caisse d'aspiration 50 a, par exemple, une longueur de 50cm et une largeur de 30cm. La largeur des caisses 50 correspond sensiblement à celle du collecteur de courant 10 de manière à pouvoir aspirer le solvant de l'encre.

Les paramètres de l'étape de filtration sont, avantageusement, choisis de manière à permettre une complète élimination du solvant. Par exemple, la longueur de la zone de filtration peut aller de 20cm à 20m, et de préférence de 50cm à 10m. La largeur de la zone de filtration peut aller de 0,1m à 10m, de préférence de 0,2m à 1m. La vitesse du tapis de convoyage peut aller de 0,1m à 100m/min. On peut combiner une pression d'aspiration de -800mbar avec une vitesse de 1m/min, de manière à éliminer complètement le solvant avant la fin du tapis de convoyage.

Une fois le solvant aspiré, le matériau actif 20 devient complètement sec sur le dessus du collecteur de courant 10.

L'installation peut également comprendre, en aval du moyen d'aspiration, un moyen pour injecter une solution contenant un liant, et/ou un moyen de séchage, et/ou un moyen pour calandrer. Les moyens de dépôt de l'encre et de dépôt du liant sont positionnés en regard de la première face du collecteur de courant 10.

Comme représenté sur la figure 5, par des pointillés, le liant peut être introduit dans l'encre (étape b) ou, selon une variante, dans une solution qui est déposée sur l'électrode après l'étape d'aspiration (i.e. après l'étape c). La solution comprend le liant dispersé dans un solvant. L'imprégnation de l'électrode peut être réalisée, par exemple, par immersion de l'électrode dans la solution avec le liant. Après élimination du solvant, par exemple, par évaporation, le liant est réparti dans l'électrode, ce qui vient renforcer les contacts. Le liant peut être introduit sur la ligne du tapis de convoyage, ou dans une étape ultérieure. Si besoin, une étape de séchage peut être réalisée pour évaporer le solvant. L'étape de séchage peut être réalisée sur la ligne du tapis de convoyage, ou dans une étape ultérieure.

Dans une étape ultérieure, l'électrode peut être calandrée. Cette étape permet, avantageusement, de réduire la porosité de l'électrode pour améliorer son fonctionnement dans la batterie et d'augmenter sa densité d'énergie. L'étape de calandrage peut être réalisée sur la ligne du tapis de convoyage, ou dans une étape ultérieure.

L'électrode formée du collecteur de courant 10 et du matériau actif 20 peut être bobinée et/ou découpée aux dimensions désirées. Cette étape peut être réalisée dans le procédé à n'importe quel moment dès que le matériau actif 20 a été déposé sur le collecteur de courant 10 et dès que le solvant a été éliminé. Par exemple, cette étape peut être réalisée avant ou après le calandrage, ou encore avant ou après le dépôt éventuel du liant. De préférence, les étapes de découpe et/ou de bobinage sont réalisées après l'étape de calandrage.

Le filtre 40 peut être séparé du collecteur de courant 10 avant ou après l'étape de calandrage. Le filtre peut être nettoyé et réutilisé.

En amont du moyen de dépôt de l'encre 30, le collecteur de courant 10 et/ou le filtre 40 peuvent être enroulés en bobine. Le mouvement des rouleaux, et du tapis, permet de les dérouler avant d'atteindre le moyen de dépôt d'encre. Des technologies de « roll-to-roll » (« enroulé et déroulé ») peuvent être utilisées.

Le filtre 40 peut être fabriqué en ligne, en continu, en amont du moyen de dépôt de l'encre. Un dispositif séchage et/ou d'aspiration pourra être positionné en amont du moyen de dépôt de l'encre afin d'avoir un filtre sec.

Le collecteur de courant 10 peut également être fabriqué en ligne et en continu, en amont du dispositif de dépôt de l'encre. Il est possible d'avoir un système de perçage permettant de réaliser, de manière continue, des trous traversants 12 dans un feuillard ou dans une feuille métallique 11. Il peut également être produit sur une autre machine.

### Exemples illustratifs et non limitatifs de modes de réalisation :

Dans chaque exemple, après l'élimination du solvant, un liant polymérique est déposé sur la couche de matériau actif de l'électrode. Le liant comprend des particules de poly(fluorure de vinylidène) (PVDF) dispersées dans du N-méthylpyrrolidin-2-one (NMP). Le pourcentage de matière sèche représente 3% massique de la solution. Le PVDF représente 1% par rapport au poids total de l'électrode. L'électrode est ensuite séchée à 55°C pour faire évaporer le NMP. Afin d'éliminer les traces de solvant un deuxième séchage après l'étape de calandrage a été effectué sous vide primaire à 95°C.

### Exemple 1 : Fabrication d'une électrode (anode) épaisse à base de graphite ayant une capacité spécifique de 18mAh.cm⁻² sur un collecteur de courant percé en cuivre.

Le collecteur de courant 10 est une feuille 11 de cuivre de 12µm d'épaisseur préalablement percée de manière à obtenir le schéma tel que représenté sur les figures la et 1b. Les distances D1 et D2 sont de 1,5 mm et le diamètre des trous 12 est 1mm. Les trous 12 sont traversants et ont des bavures 13.

La composition de l'encre 30 est la suivante : 97,5% de graphite (D₅₀=20µm) et 2,5% d'un agent électriquement conducteur pour améliorer la conductivité (fibres de carbone) sont dissous dans de l'eau déionisée. Le pourcentage de matériau sec est de 20%.

Le matériau actif est complètement sec à la fin de l'étape d'aspiration. La capacité spécifique est d'environ 18 mAh.cm⁻².

Après le dépôt d'une solution contenant le liant et un solvant, puis après l'évaporation du solvant, l'électrode est soumise à une étape de calandrage de manière à obtenir une porosité de 40%. Le grammage final est de 53mg/cm² et l'épaisseur des électrodes est de 390µm. L'électrode compressée peut être découpée aux formes et dimensions désirées pour être assemblée dans une batterie Li-Ion.

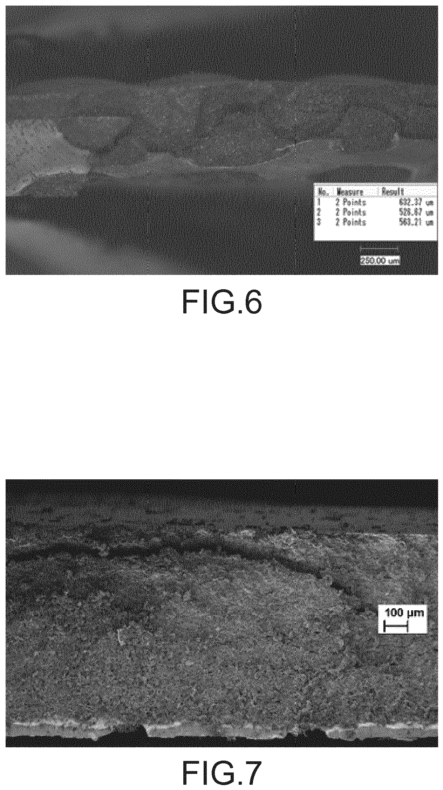

La figure 6 représente l'électrode obtenue vue en coupe.

### Exemple 2 : Fabrication d'une électrode (cathode) épaisse à base de NMC ayant une capacité spécifique de 15mAh.cm⁻² sur un collecteur de courant percé en aluminium.

Le collecteur de courant 10 est une feuille 11 d'aluminium de 20µm d'épaisseur préalablement percée de manière à obtenir le schéma tel que représenté sur les figures la et 1b. Les distances D1 et D2 sont de 1,5 mm et le diamètre des trous 12 est 1mm. Les trous 12 sont traversants et ont des bavures 13.

La composition de l'encre 30 est la suivante : 95,5% de NMC (D₅₀=6µm) et 4,5% d'un agent électriquement conducteur pour améliorer la conductivité (fibres de carbone) sont dissous dans de l'eau déionisée. Le pourcentage de matériau sec est de 20%.

Le matériau actif est complètement sec à la fin de l'étape d'aspiration. La capacité spécifique est d'environ 15 mAh.cm⁻².

Après dépôt du liant, et évaporation du solvant, l'électrode est soumise à une étape de calandrage de manière à obtenir une porosité de 32%. Le grammage final est de 113mg/cm² et l'épaisseur des électrodes est de 330µm. L'électrode compressée peut être découpée aux formes et dimensions désirées pour être assemblée dans une batterie Li-Ion.

La figure 7 représente l'électrode obtenue vue en coupe.

Dans les exemples précédents, les électrodes peuvent être facilement fabriquées en continu avec les paramètres suivants, donnés à titre illustratif. L'homme du métier pourra adapter les paramètres, en fonction de la composition de l'encre, de la nature des électrodes et de la cadence de production recherchée.

Le tapis de convoyage 60 a une longueur de 2,5m et une largeur de 40cm et avance à une vitesse de 1m/min.

Le collecteur de courant 10 est positionné sur le filtre 40, en amont du dispositif de dépôt. Le filtre 40 et le collecteur de courant 10 avance à une vitesse de 1 m.min⁻¹. Le collecteur de courant a une largeur de 30cm.

Le filtre 40 est une membrane en PVDF. La membrane peut être fonctionnalisée pour être hydrophile. A titre illustratif, le filtre 40 est une membrane Durapore®HVLP00010 hydrophile en PVDF. Elle a des pores de 0,45µm. Elle a une largeur de 30cm.

A partir de la position de la première tête de dépôt, sont positionnés quatre caissons d'aspiration 50, disposées selon une matrice carrée. Chaque caisson 50 a une longueur de 50cm et d'une largeur de 30cm. La pression d'aspiration est de -800mbar pour chaque caisson.

A la fin du tapis de convoyage 60, une étape additionnelle de séchage est réalisée. Dans chacun des exemples réalisés, le collecteur de courant 10, recouvert du matériau actif 20, présente une tenue mécanique suffisante pour être découpé en électrodes de 25cm x 25cm.

A partir de telles électrodes, on peut réaliser une batterie ou un accumulateur, une cellule photovoltaïque, ou encore un supercondensateur à empilement de cellules électrochimiques comprenant une ou plusieurs électrodes obtenues selon le procédé de l'invention.

La présente invention s'applique, notamment, à toute électrode de batterie métal-ion, qui fonctionne selon le principe d'insertion ou de désinsertion, ou autrement dit intercalation-désintercalation, d'ions métalliques dans au moins une électrode. Elle s'applique, par exemple, aux électrodes de batteries Sodium-ion, Magnésium-ion, Aluminium-ion, Potassium-ion, ou encore Calcium-ion.

Il est également possible de réaliser des électrodes pour des batteries au plomb ou des batteries au nickel. Les batteries au nickel sont, par exemple, des batteries nickel-cadmium (NiCd), nickel-métal-hydrure (NiMH), nickel-fer (NiFe), nickel-hydrogène (NiH) ou nickel-zinc (NiZn).

L'invention s'applique aussi bien aux batteries primaires (non-rechargeables) que secondaires (rechargeables).

D'une manière générale, l'invention s'applique à tout dispositif comprenant au moins un collecteur sur lequel un matériau actif est déposé de manière à former une électrode. Il pourrait également être utilisé pour former une couche de matériau actif auto-supporté.

A titre illustratif et non limitatif, dans le cas d'une batterie lithium-ion, la batterie comporte au moins une cellule électrochimique comprenant une anode (électrode positive) et une cathode (électrode négative), de part et d'autre, d'un séparateur imprégné d'électrolyte. L'anode et/ou la cathode peuvent être obtenues par le procédé décrit précédemment. Traditionnellement, le couple de matériaux à l'anode et à la cathode sera choisi par l'homme du métier de manière à former une batterie ou accumulateur Li-ion fonctionnant à un niveau de tension élevé, typiquement autour de 3,8 Volt.

Plusieurs modes d'empilement peuvent être envisagés : soit un empilement avec des électrodes de même polarité supportées par leurs collecteurs de courant en vis à vis, soit un empilement alterné d'électrode négative et positive avec leurs collecteurs de courant également en vis-à-vis mais séparés par un séparateur non conducteur électronique.

Le séparateur peut être constitué d'un ou plusieurs films. La batterie comprend également une languette de connexion à la cathode, une languette de connexion à l'anode et enfin, un emballage agencé pour contenir la cellule électrochimique avec étanchéité tout en étant traversé par une partie des connectiques formant les bornes de sortie.

L'électrolyte est en général un mélange de solvants organiques, par exemple des carbonates dans lesquels est ajouté un sel de lithium typiquement LiPF₆.

Le procédé a été décrit pour un mode de réalisation en continu, qui est particulièrement avantageux pour fabriquer des électrodes à grande échelle. L'homme du métier pourrait également fabriquer des électrodes en discontinu (mode « batch »), ou semi-discontinu, en réalisant les étapes séparément les unes des autres. Par exemple, une première machine pourrait servir au dépôt de l'encre, une deuxième machine pourrait servir à l'aspiration, une troisième machine pourrait servir au dépôt du liant, etc.

L'homme du métier pourrait également fabriquer des électrodes classiques, i.e. non épaisses, avec un tel procédé.

## Revendications

1. Procédé de fabrication en continu d'une électrode comprenant les étapes suivantes réalisées simultanément et en continu :
a) Défilement continu d'un collecteur de courant (10),
le collecteur de courant ayant une première face et une seconde face opposée à la première face, le collecteur de courant (10) ayant au moins un trou traversant non ébavuré, allant de la première face à la seconde face, la bavure (13) faisant saillie sur la première face du collecteur de courant (10),
b) Dépôt en continu d'une encre (30) sur la première face du collecteur de courant (10),
l'encre (30) comprenant au moins un solvant et un matériau actif (20) d'électrode,
c) Aspiration en continu de l'encre (30) déposée, à travers le collecteur de courant (10), depuis la première face vers la seconde face du collecteur de courant (10), par un système d'aspiration (50), situé sur la seconde face du collecteur de courant (10), pour éliminer le solvant, de manière à former une électrode, l'épaisseur de l'électrode étant supérieure au rayon du trou traversant,
un filtre (40) étant disposé entre le collecteur de courant (10) et le système d'aspiration (50), le filtre (40) ayant des tailles de pores allant de 0,1µm à 50µm, et de préférence de 0,2µm à 5µm, de manière à retenir le matériau actif (20).

2. Procédé selon la revendication 1, **caractérisé en ce que** le filtre (40) a une porosité supérieure à 40%.

3. Procédé selon l'une des revendications 1 et 2, **caractérisé en ce que** le système d'aspiration (50) se situe en aval de la zone de dépôt, dans le sens de défilement du collecteur de courant (10).

4. Procédé selon l'une des revendications 1 et 2, **caractérisé en ce que** le système d'aspiration (50) est face à la zone de dépôt de manière à aspirer immédiatement l'encre dès son dépôt sur le collecteur de courant (10).

5. Procédé selon l'une des revendications 1 à 4, **caractérisé en ce que** le collecteur de courant (10) comprend, et, de préférence, est constitué de fibres (14) de carbone.

6. Procédé selon la revendication précédente, **caractérisé en ce que** le diamètre des fibres (14) de carbone va de 2µm à 50µm et **en ce que** la masse volumique de fibres (14) de carbone va de 5 à 400mg/cm³.

7. Procédé selon l'une des revendications 1 à 4, **caractérisé en ce que** le collecteur de courant (10) est une feuille ou un feuillard métallique.

8. Procédé selon l'une quelconque des revendications 1 à 7, **caractérisé en ce que** le filtre (40) est en verre fritté, en papier ou en polymère.

9. Procédé selon l'une quelconque des revendications 1 à 7, **caractérisé en ce que** le filtre (40) est électriquement conducteur.

10. Procédé selon la revendication précédente, **caractérisé en ce que** le filtre (40) est métallique ou en carbone.

11. Procédé selon l'une des revendications précédentes 9 et 10, **caractérisé en ce que** le filtre (40) est solidaire du collecteur de courant.

12. Procédé selon l'une quelconque des revendications précédentes, **caractérisé en ce que** l'aspiration va de -100mbar à -1000mbar, et, de préférence, de - 400mbar à -900mbar.

13. Procédé selon l'une quelconque des revendications précédentes, **caractérisé en ce que** l'encre (30) a une viscosité allant de 0,001 à 50Pa.s, et de préférence de 0,01 à 50Pa.s.

14. Procédé selon l'une quelconque des revendications précédentes, **caractérisé en ce que**, après l'étape c), le procédé comporte une étape dans laquelle un liant est déposé sur l'électrode (20).

15. Procédé selon l'une quelconque des revendications précédentes, **caractérisé en ce que**, le procédé comporte une étape ultérieure dans laquelle l'électrode (10) est calandrée.

16. Procédé selon l'une quelconque des revendications 1 à 15, **caractérisé en ce que** le matériau actif (20) est du graphite et **en ce que** le collecteur de courant (10) est en cuivre ou en fibres de carbone.

17. Procédé selon l'une quelconque des revendications 1 à 15, **caractérisé en ce que** le matériau actif (20) est un oxyde de lithium-nickel-cobalt-manganèse et **en ce que** le collecteur de courant (10) est en aluminium ou en fibres de carbone.

## Patentansprüche

1. Verfahren zur kontinuierlichen Herstellung einer Elektrode, umfassend die folgenden Schritte, die gleichzeitig und kontinuierlich durchgeführt werden:
a) kontinuierliches Abwickeln eines Stromkollektors (10),
wobei der Stromkollektor eine erste Fläche und eine zweite Fläche entgegengesetzt zur ersten Fläche hat, wobei der Stromkollektor (10) wenigstens ein nicht entgratetes Durchgangsloch hat, das von der ersten Fläche zur zweiten Fläche geht, wobei der Grat (13) auf der ersten Fläche des Stromkollektors (10) vorsteht,
b) kontinuierliches Aufbringen einer Tinte (30) auf die erste Fläche des Stromkollektors (10),
wobei die Tinte (30) wenigstens ein Lösungsmittel und ein aktives Elektrodenmaterial (20) umfasst,
c) kontinuierliches Absaugen der aufgebrachten Tinte (30) durch den Stromkollektor (10) hindurch von der ersten Fläche in Richtung der zweiten Fläche des Stromkollektors (10) mittels eines Absaubsystems (50), das auf der zweiten Fläche des Stromkollektors (10) angeordnet ist, um das Lösungsmittel zu entfernen, derart, dass eine Elektrode gebildet wird, wobei die Dicke der Elektrode größer als der Radius des Durchgangslochs ist,
wobei ein Filter (40) zwischen dem Stromkollektor (10) und dem Absaugsystem (50) angeordnet ist, wobei der Filter (40) Porengrößen hat, die von 0,1 µm bis 50 µm gehen, vorzugsweise von 0,2 µm bis 5 µm, derart, dass das aktive Material (20) zurückgehalten wird.

2. Verfahren nach Anspruch 1, **dadurch gekennzeichnet, dass** der Filter (40) eine Porosität größer als 40 % hat.

3. Verfahren nach einem der Ansprüche 1 und 2, **dadurch gekennzeichnet, dass** das Absaugsystem (50) sich in der Richtung der Abwicklung des Stromkollektors (10) stromabwärts der Aufbringungszone befindet.

4. Verfahren nach einem der Ansprüche 1 und 2, **dadurch gekennzeichnet, dass** das Absaugsystem (50) gegenüber der Aufbringungszone ist, derart, dass die Tinte unmittelbar ab ihrer Aufbringung auf den Stromkollektor (10) abgesaugt wird.

5. Verfahren nach einem der Ansprüche 1 bis 4, **dadurch gekennzeichnet, dass** der Stromkollektor (10) Kohlenstofffasern (14) umfasst und vorzugsweise daraus gebildet ist.

6. Verfahren nach dem vorhergehenden Anspruch, **dadurch gekennzeichnet, dass** der Durchmesser der Kohlenstofffasern (14) von 2 µm bis 50 µm geht, und dass die Volumenmasse der Kohlenstofffasern (14) von 5 bis 400 mg/cm³ geht.

7. Verfahren nach einem der Anspruche 1 bis 4, **dadurch gekennzeichnet, dass** der Stromkollektor (10) eine Folie oder ein Band aus Metall ist.

8. Verfahren nach einem der Ansprüche 1 bis 7, **dadurch gekennzeichnet, dass** der Filter (40) aus Glasfritte, aus Papier oder aus Polymer ist.

9. Verfahren nach einem der Ansprüche 1 bis 7, **dadurch gekennzeichnet, dass** der Filter (40) elektrisch leitend ist.

10. Verfahren nach dem vorhergehenden Anspruch, **dadurch gekennzeichnet, dass** der Filter (40) aus Metall oder aus Kohlenstoff ist.

11. Verfahren nach einem der vorhergehenden Ansprüche 9 und 10, **dadurch gekennzeichnet, dass** der Filter (40) mit dem Stromkollektor verbunden ist.

12. Verfahren nach einem der vorhergehenden Ansprüche, **dadurch gekennzeichnet, dass** die Absaugung von -100 mbar bis -1000 mbar geht, und vorzugsweise von -400 mbar bis -900 mbar.

13. Verfahren nach einem der vorhergehenden Ansprüche, **dadurch gekennzeichnet, dass** die Tinte (30) eine Viskosität hat, die von 0,001 bis 50 Pa.s geht, und vorzugsweise von 0,01 bis 50 Pa.s.

14. Verfahren nach einem der vorhergehenden Ansprüche, **dadurch gekennzeichnet, dass** das Verfahren nach dem Schritt c) einen Schritt umfasst, in dem ein Binder auf die Elektrode (20) aufgebracht wird.

15. Verfahren nach einem der vorhergehenden Ansprüche, **dadurch gekennzeichnet, dass** das Verfahren einen nachfolgenden Schritt umfasst, in dem die Elektrode (10) kalandriert wird.

16. Verfahren nach einem der Ansprüche 1 bis 15, **dadurch gekennzeichnet, dass** das aktive Material (20) Graphit ist, und dass der Stromkollektor (10) aus Kupfer oder aus Kohlenstofffasern ist.

17. Verfahren nach einem der Ansprüche 1 bis 15, **dadurch gekennzeichnet, dass** das aktive Material (20) ein Lithium-Nickel-Kobalt-Mangan-Oxid ist, und dass der Stromkollektor (10) aus Aluminium oder aus Kohlenstofffasern ist.

## Claims

1. A method for continuously manufacturing an electrode comprising the following steps made simultaneously and continuously:
a) continuously travelling a current collector (10),
the current collector having a first face and a second face opposite to the first face, the current collector (10) having at least one non-deburred through hole, extending from the first face to the second face, the burr (13) projecting onto the first face of the current collector (10),
b) continuously depositing an ink (30) on the first face of the current collector (10),
the ink (30) comprising at least a solvent and an electrode active material (20),
c) continuously sucking the ink (30) deposited, through the current collector (10), from the first face to the second face of the current collector (10), by a sucking system (50), located on the second face of the current collector (10), to remove the solvent, so as to form an electrode, the thickness of the electrode being greater than the radius of the through hole,
a filter (40) being disposed between the current collector (10) and the sucking system (50), the filter (40) having pore sizes ranging from 0.1µm to 50µm, and preferably from 0.2µm to 5µm, so as to retain the active material (20).

2. The method according to claim 1, **characterised in that** the filter (40) has a porosity greater than 40%.

3. The method according to one of claims 1 and 2, **characterised in that** the sucking system (50) is located downstream of the depositing zone, in the travelling sense of the current collector (10).

4. The method according to one of claims 1 and 2, **characterised in that** the sucking system (50) faces the depositing zone so as to immediately suck the ink as soon as it is deposited onto the current collector (10).

5. The method according to one of claims 1 to 4, **characterised in that** the current collector (10) comprises, and preferably consists of, carbon fibres (14).

6. The method according to the previous claim, **characterised in that** the diameter of the carbon fibres (14) ranges from 2µm to 50µm and **in that** the density of carbon fibres (14) ranges from 5 to 400mg/cm³.

7. The method according to one of claims 1 to 4, **characterised in that** the current collector (10) is a metal sheet or strip.

8. The method according to any of claims 1 to 7, **characterised in that** the filter (40) is of sintered glass, paper or polymer.

9. The method according to any of claims 1 to 7, **characterised in that** the filter (40) is electrically conductive.

10. The method according to the previous claim, **characterised in that** the filter (40) is of metal or carbon.

11. The method according to one of the previous claims 9 and 10, **characterised in that** the filter (40) is integral with the current collector.

12. The method according to any of the previous claims, **characterised in that** sucking ranges from -100mbar to -1 000mbar, and preferably from -400mbar to -900m bar.

13. The method according to any of the previous claims, **characterised in that** the ink (30) has a viscosity ranging from 0.001 to 50Pa.s, and preferably from 0.01 to 50Pa.s.

14. The method according to any of the previous claims, **characterised in that**, after step c), the method includes a step in which a binder is deposited onto the electrode (20).

15. The method according to any of the previous claims, **characterised in that**, the method includes a subsequent step in which the electrode (10) is calandered.

16. The method according to any of claims 1 to 15, **characterised in that** the active material (20) is graphite and **in that** the current collector (10) is made of copper or carbon fibres.

17. The method according to any of claims 1 to 15, **characterised in that** the active material (20) is a lithium-nickel-cobalt-manganese oxide and **in that** the current collector (10) is of aluminium or carbon fibres.
